Europäisches Patentamt

**European Patent Office**

**Office européen des brevets**

(11) Publication number: **0 071 911**
**A2**

(12) **EUROPEAN PATENT APPLICATION**

(21) Application number: **82106916.8**

(22) Date of filing: **30.07.82**

(51) Int. Cl.³: **G 09 G 3/36, H 04 N 3/12**

(30) Priority: **03.08.81 JP 120772/81**

(43) Date of publication of application: **16.02.83**
**Bulletin 83/7**

(84) Designated Contracting States: **DE FR GB**

(71) Applicant: **Hitachi, Ltd., 5-1, Marunouchi 1-chome, Chiyoda-ku Tokyo 100 (JP)**

(72) Inventor: **Hanmura, Hisao, 2200, Oaza Kamino, Kumagaya-shi (JP)**
Inventor: **Kawakami, Hideaki, 1386-8, Senbacho, Mito-shi (JP)**

(74) Representative: **Ebbinghaus, Dieter et al, v. FÜNER, EBBINGHAUS, FINCK Patentanwälte European Patent Attorneys Mariahilfplatz 2 & 3, D-8000 München 90 (DE)**

(54) **Display device using a multiplex matrix display panel.**

(57) A display device comprises a display panel (1) having a pair of substrates with a plurality of scanning electrodes ($X_1$, $X_2$, $X_6$) and a plurality of signal electrodes ($Y_1$, $Y_2$, ..., $Y_9$) formed on opposing surfaces of the substrates and a display medium confined between the substrates, a scanning electrode drive circuit (11, 21) for selectively applying one of a plurality of kinds of DC voltage signals ($V_1$, $V_2$, $V_5$, $V_6$; $V_3$, $V_1$, $V_5$) to each of the scanning electrodes, and a signal electrode drive circuit (12, 3, 22) for selectively applying one of a plurality of kinds of DC voltage signals ($V_1$, $V_3$, $V_4$, $V_6$; $V_2$, $V_4$) to each of the signal electrodes. In the display device, at least one of the scanning electrode and signal electrode drive circuits comprises a plurality of plural-input/one-output electronic switches ($S_{X1}$, ..., $S_{X6}$; $S_{Y1}$, ..., $S_{Y9}$) each including a plurality of one-input/one-output switches ($S_{X11}$, $S_{X12}$, ...; $S_{Y11}$, $S_{Y12}$, ...) associated with one electrode which are the same in number as three or more kinds of DC voltage signals and which are connected in parallel to independently receive each of the DC voltage signals and transmit it to the one electrode.

## DISPLAY DEVICE USING A MULTIPLEX MATRIX DISPLAY PANEL

This invention relates to a display device and more particularly to an improvement in a drive circuit for the display device.

A multiplex matrix display panel of a display device utilizing a display medium such as liquid crystal comprises, for example, a pair of substrates opposing to each other with a slight gap therebetween, a plurality of scanning electrodes juxtaposed on one confronting surface of the opposing substrates, a plurality of signal electrodes juxtaposed on the other confronting surface, and a liquid crystal serving as the display medium confined in the gap between the opposing substrates, whereby a great number of picture cells arranged in a matrix pattern are formed by opposing portions of the electrodes and liquid crystal confined therebetween. The display panel of this construction is driven for a display operation by changing the magnitude (effective value) of a voltage applied across the opposing electrodes for each picture cell.

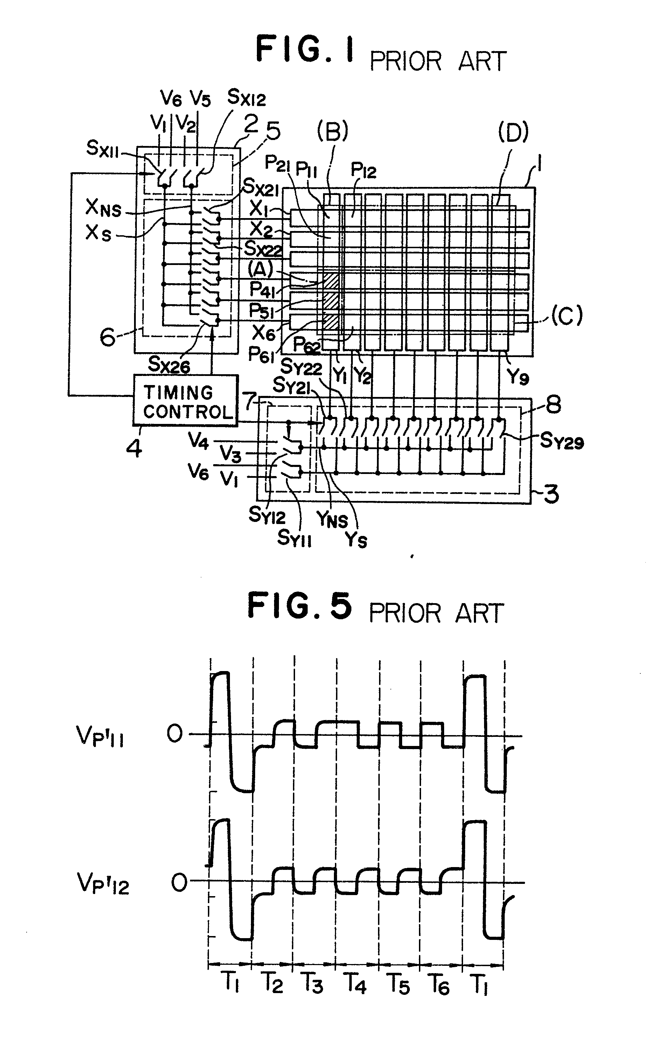

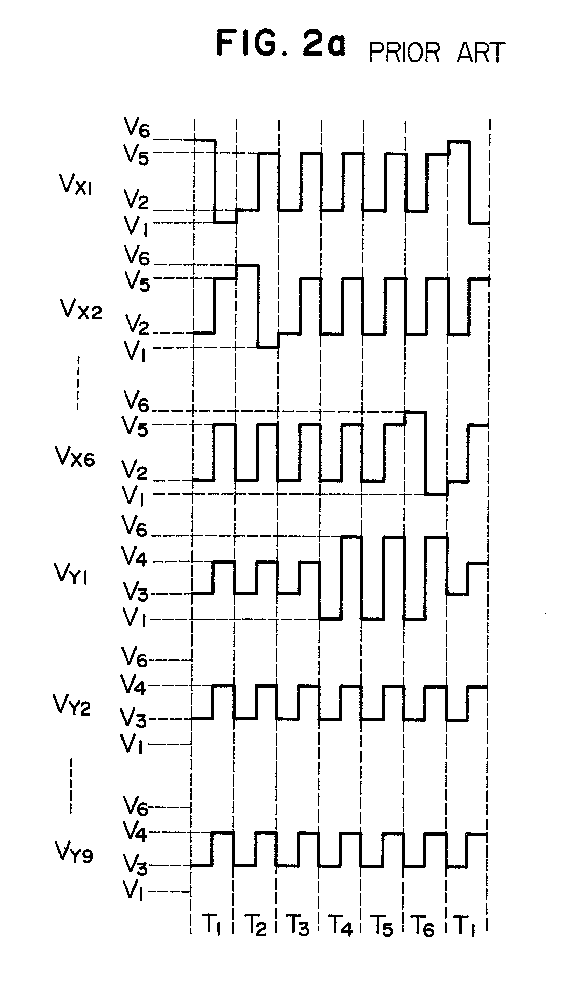

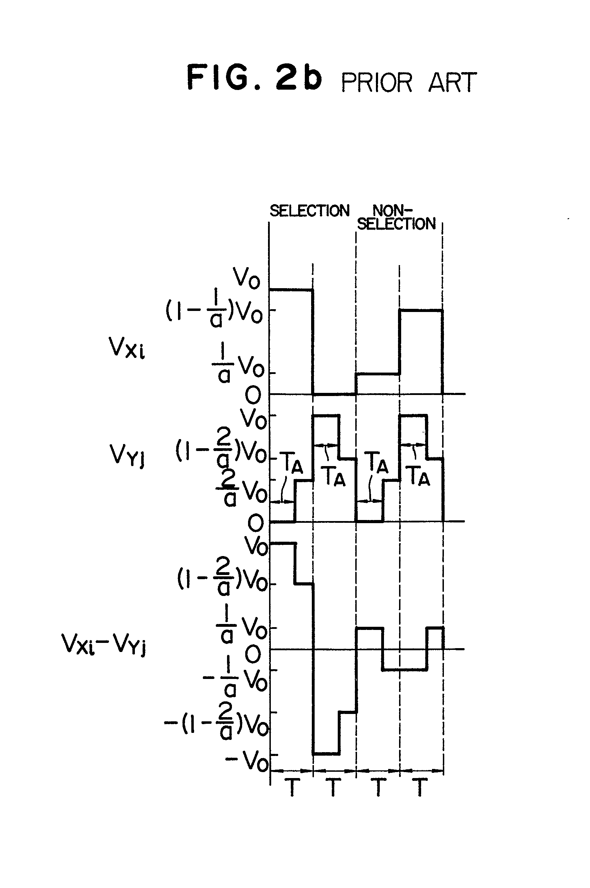

One may refer to, for example, Japanese Patent Publication No. 3574/79 and Japanese Patent Application Laid-open No. 79491/80 which disclose a drive circuit for this purpose. The drive circuit will be explained with reference to Figs. 1 and 2.

Illustrated in Fig. 1 are a matrix display panel 1 of six rows and nine columns, a scanning electrode drive circuit 2, a signal electrode drive circuit 3, and a timing control circuit 4 adapted for the drive circuits 2 and 3.

The display panel 1 built up of a pair of substrates and a liquid crystal serving as a display medium confined in a gap between the substrates has a plurality of scanning electrodes $X_i$ (i=1, 2, ---, 6) constituting one electrode group and a plurality of signal electrodes $Y_j$ (j=1, 2, ---, 9) confronting the scanning electrodes and constituting the other electrode group. The two electrode groups are orthogonal to each other and a number of picture cells $P_{ij}$ are formed by opposing portions of the scanning and signal electrodes and liquid crystal confined therebetween, completing a matrix pattern of six rows and nine columns as shown in Fig. 1. The number of rows and columns of the matrix can be determined dependent on, for example, the size of the display screen and resolution required for the screen.

The scanning electrode drive circuit 2 includes multiplexers 5 and 6. The multiplexer 5 has two two-input/one-output electronic switches $S_{X11}$ and $S_{X12}$ and it receives four DC voltage signals $V_1$, $V_2$, $V_5$ and $V_6$. One electronic switch $S_{X11}$ switches alternately the signals $V_1$ and $V_6$ to transmit an AC selection

signal $X_S$, and the other electronic switch $S_{X12}$ switches the signals $V_2$ and $V_5$ to transmit an AC non-selection signal $X_{NS}$. The multiplexer 6 has a number, corresponding to the number of the scanning electrodes, of two-input/one-output electronic suitches $S_{X2i}$ (i=1, 2, ---, 6) and it is responsive to a control signal of the timing control circuit 4 so as to apply either selection signal $X_S$ or non-selection signal $X_{NS}$ to the scannint electrodes $X_i$. In applying these signals, scanning electrode $X_1$ is first applied with the selection signal $X_S$ during a period Tl and the application of the non-celection signal $X_{NS}$ to the remaining scanning electrodes $X_i$ (i=2, 3, ---, 6) follows. During a subsequent period $T_2$, the selection signal $X_S$ is applied to the scanning electrode $X_2$, followed by the application of the non-selection signal $X_{NS}$ to the remaining scanning electrodes. The sequential application of the selection signal $X_S$ is repeated to perform the scanning operation.

Similarly, the signal electrode drive circuit 3 includes multiplexers 7 and 8. In the multiplexer 7, an electronic switch $S_{Y11}$ switches DC voltage signals $V_1$ and $V_6$ to transmit an AC selection signal $Y_S$, and an electronic switch $S_{Y12}$ switches DC voltage signals $V_3$ and $V_4$ to transmit a non-selection signal $Y_{NS}$. These signals $Y_S$ and $Y_{NS}$ are switched by a number, corresponding to the number of signal electrodes, of electronic switches $S_{Y2j}$ (j=1, 2, ---, 9) included in the multiplexer 8 and either selection signal $Y_S$ or non-selection signal $Y_{NS}$ is applied to the signal electrodes $Y_j$. During a period $T_i$, either selection signal $Y_S$ or non-selection signal $Y_{NS}$ is applied to the signal electrode $Y_j$ in accordance with an image data fed from the timing control circuit 4 corresponding to picture cells $P_{ij}$ (j=1, 2, ---, 9) on the i-th row.

A voltage applied to the liquid crystal corresponds to the difference between the voltages applied to the scanning and signal electrodes. Thus, the magnitudes of DC voltage signals $V_1$ to $V_6$ are set so that an effective voltage exceeding a threshold voltage of the liquid crystal is applied to only particular picture cells $P_{ij}$ whose scanning and signal electrodes are applied with the selection signals $X_S$ and $Y_S$ to thereby turn on the particular picture cells.

Fig. 2a illustrates voltage waveforms $V_{Xi}$ and $V_{Yj}$ that are applied to the electrodes $X_i$ and $Y_j$ when only the picture cells $P_{41}$, $P_{51}$ and $P_{61}$ are turned on. The scanning electrode $X_1$ is applied with the selection signal $X_S$ during only the period $T_1$ and with the non-selection signals during the other periods, so that the scanning electrodes are sequentially scanned. The signal electrode $Y_1$ is applied with the selection signal $Y_S$ during the periods $T_4$, $T_5$ and $T_6$ with the non-selection signal $Y_{NS}$ during the periods $T_1$, $T_2$, and $T_3$.

The signal electrodes $Y_2$ to $Y_9$ are applied with the non-selection signal $Y_{NS}$ throughout the periods $T_1$ to $T_6$.

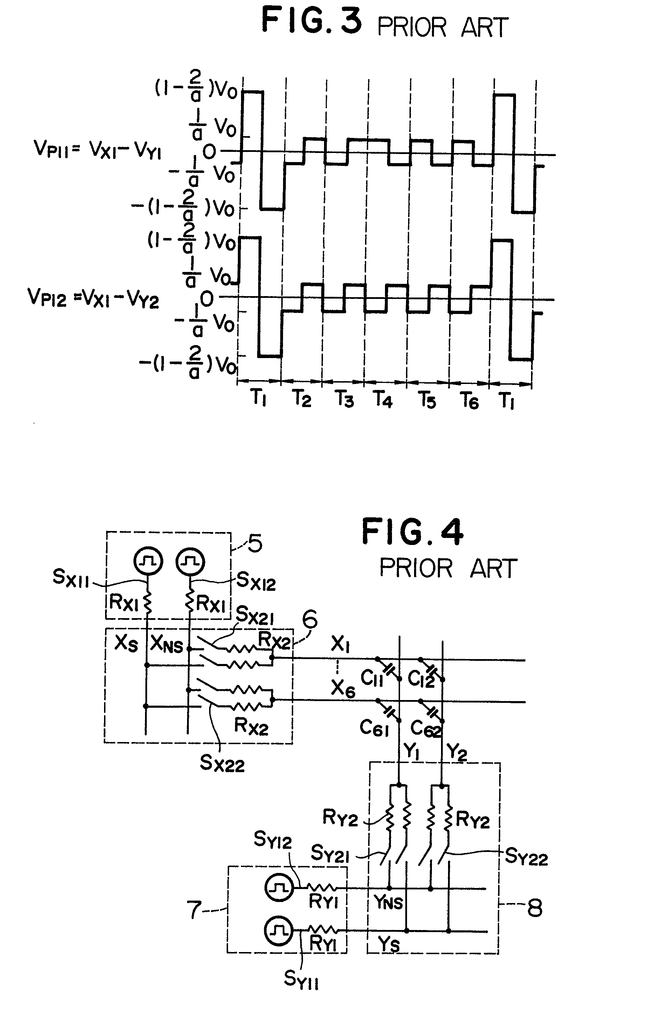

Voltags $V_{P11}$ and $V_{P12}$ applied to the liquid crystal associated, for example, with the picture cells $P_{11}$ and $P_{12}$ correspond to the difference voltage between $V_{X1}$ and $V_{Y1}$ and the difference voltage between $V_{X1}$ and $V_{Y2}$, respectively, and ideally, effective values of these voltages $V_{P11}$ and $V_{P12}$ are equal to each other as shown in Fig. 3

The voltages $V_{P11}$ and $V_{P12}$ are of alternating waveforms with respect to zero volt. Particularly, while the voltages $V_{Y1}$ and $V_{Y2}$ have different amplitudes during the periods $T_4$, $T_5$ and $T_6$, it is characteristic to the voltages $V_{P11}$ and $V_{P12}$ that they have the same amplitude, although being in opposite phase relationship, throughout these periods. In order to obtain the above voltage relationship,

$$V_1 = V_C, \; V_2 = \frac{1}{a} V_0 + V_C, \; V_3 = \frac{2}{a} V_0 + V_C,$$
$$V_4 = (1-\frac{2}{a})V_0 + V_C, \; V_5 = (1-\frac{1}{a}) V_0 + V_C, \text{ and}$$
$$V_6 = V_0 + V_C,$$

are required to be held for the voltages shown in Fig. 2a, where $V_C$ and $\underline{a}$ represent arbitrary constants, of which $\underline{a}$ is so selected as to fall within the vicinity of $N+1$ when $N$ is the duty ratio, and $V_0$ represents the maximum amplitude of the voltage $V_{Xi} - V_{Yj}$ applied to the picture cell $P_{ij}$, being defined as,

- 6 -                    0071911

$$a\sqrt{\frac{N}{N-(a^2-1)}} \; V_{TH} < V_O$$

when $V_{TH}$ is a threshold voltage of the liquid crystal. For example, when $V_C = 0$ stands as shown in Fig. 2b, $V_1=0$, $V_2=\frac{1}{a} V_O$, $V_3=\frac{2}{a}V_O$, $V_4=(1-\frac{2}{a})V_O$, and $V_5=(1-\frac{1}{a})V_O$ are held.

The scanning electrode $X_i$ is selected once per one frame scanning or for only one period of i x T period interval and the brightness of each associated picture cell is determined by a ratio $T_A/T$ of the voltage signal $V_{Yj}$ applied to the signal electrode $Y_j$ selected during the selection of the scanning electrode $X_i$. When $T_A=T$, the brightness of the picture cell becomes maximum and when $T_A=0$, it becomes minimum. Accordingly, it is possible to provide a display with halftone by arbitrarily changing $T_A/T$. In Fig. 2a, only binary states are exemplarily illustrated which correspond to $T_A=T$ and $T_A=0$.

Incidentally, in the conventional drive circuit set forth above, on-resistance of the electronic switch included in the multiplexer degrades the sharpness of rising of the drive waveform, giving rise to a waveform distortion, under the influence of which the displayed image tends to become uneven in brightness.

Assuming that only the picture cells $P_{41}$, $P_{51}$ and $P_{61}$ are turned on as shown in Fig. 1 at the termination of the scanning for one frame, the mechanism of uneven brightness generation will now be analyzed. To this end, four regions occupied by picture cells are considered in accordance with turn-on or off state of the picture cells as below:

(A) a turn-on state region;

(B) a turn-off state region above the turn-on state region;

(C) a turn-off state region on the right of the turn-on state region; and

(D) a turn-off state region at upper-right of the turn-on state region.

When the picture cells $P_{61}$, $P_{11}$, $P_{62}$ and $P_{12}$ are representing the regions (A), (B), (C) and (D) respectively defined as above, the picture cells $P_{11}$, $P_{12}$ and $P_{62}$ ought to be at the same brighness. However, when the aforementioned wafveform distortion occurs, those picture cells are subjected to different brightness, which renders the displayed pattern indistinct.

Experiments and analysis conducted by the present inventors showed that the picture cells $P_{12}$ and $P_{62}$ are substantially at the same brightness whereas the picture cells $P_{11}$ and $P_{12}$ are subjected to uneven brightness.

Then, the difference in brightness occurring between the picture cells $P_{11}$ and $P_{12}$ will be described

in detail.

With reference to Fig. 4 showing an electrical equivalent circuit of the display device of Fig. 1, liquid crystal loads such as the picture cells $P_{11}$, $P_{12}$, $P_{61}$ and $P_{62}$ are represented by electrostatic capacitances $C_{11}$, $C_{12}$, $C_{61}$ and $C_{62}$, and the multiplexers 5 and 7 are represented by pulse generators each having an internal resistance $R_{X1}$ or $R_{Y1}$ indicative of on-resistance of the electronic switches $S_{X11}$ and $S_{X12}$ or $S_{Y11}$ and $S_{Y12}$ included in the multiplexer 5 or 7. The electronic switches $S_{X2i}$ and $S_{Y2j}$ included in the multiplexers 6 and 8 are also connected in series with their on-resistances $R_{X2}$ and $R_{Y2}$. The waveform distortion is due to voltage drops across these on-resistances $R_{X1}$, $R_{X2}$, $R_{Y1}$ and $R_{Y2}$.

Thus, uneven brightness will be described which is caused by the generation of the waveform distortion due to the on-resistances $R_{X1}$, $R_{X2}$, $R_{Y1}$ and $R_{Y2}$.

(1)      Influence by $R_{Y1}$

It is now assumed that in Fig. 4, only the on-resistance $R_{Y1}$ is finite with all of the other on-resistances being zero, and influence of the on-resistance $R_{Y1}$ will be analyzed.

Either selection signal $Y_S$ or non-selection signal $Y_{NS}$ is selected by the electronic switches $S_{Y2j}$ (j=1, 2, ---, 9) included in the multiplexer 8 and applied to the signal electrode $Y_j$. Then, both the selection signal $Y_S$ and the non-selection signal $Y_{NS}$ are subjected to waveform distortion. Especially, problems arise when the number of selections of the signal $Y_S$ applied to the signal electrodes $Y_j$ is larger than the number of selections of the signal $Y_{NS}$ applied to the remaining signal electrodes $Y_j$, or vice-versa.

For example, where as in a display pattern of Fig. 1 the selection signal $Y_S$ is applied to one signal electrode $Y_1$ at the most (the electronic switch $S_{Y2j}$ of the multiplexer 8 is transferred to receive the signal $Y_S$) and the non-selection signal $Y_{NS}$ is applied to the eight signal electrodes $Y_2$ ro $Y_9$ (100 or more signal electrodes in an actual display device), current flowing through the on-resistance $R_{Y1}$ of the electronic switch $S_{Y12}$ included in the multiplexer 7 is eight times as large as current flowing through the on-resistance $R_{Y1}$ of the electronic switch $S_{Y11}$. consequently, the influence of the voltage drop across the on-resistance $R_{Y1}$ of the electronic switch $S_{Y12}$ becomes predominant so that the waveform distortion of the non-selection signal $Y_{NS}$ becomes larger than that of the selection signal $Y_S$ and it may be considered that the generation of waveform distortion prevails substantially in the non-selection signal $Y_{NS}$ alone.

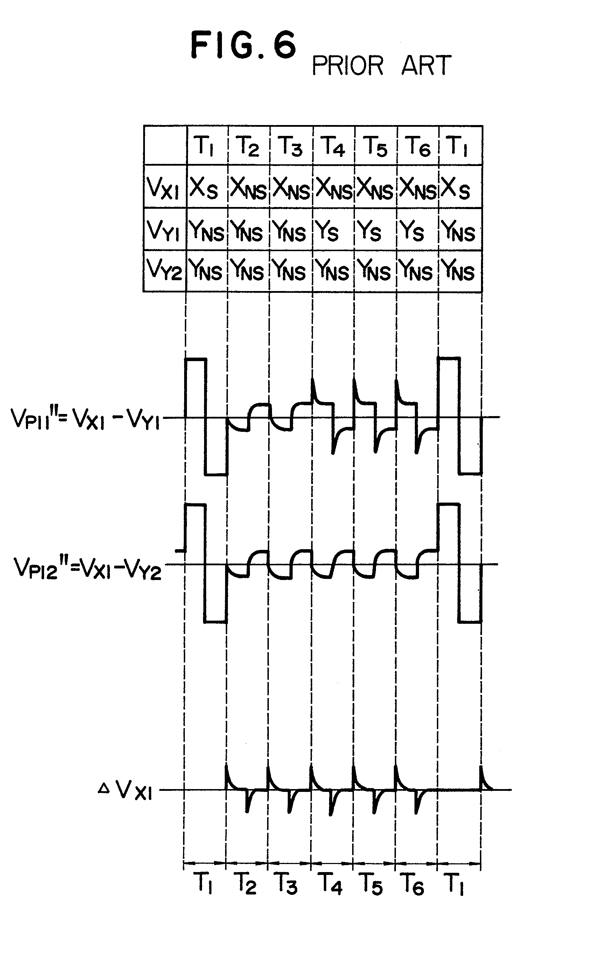

Fig. 5 shows voltage waveforms $V_{P11}'$ and $V_{P12}'$ applied to the picture cells $P_{11}$ and $P_{12}$ when the

waveform distortion under the influence of the on-resistance $R_{Y1}$ is taken into consideration.

These voltages have the same waveform during the periods $T_1$ through $T_3$ since both the column electrodes $Y_1$ and $Y_2$ are applied with the non-selection signal $Y_{NS}$. In contrast, during the periods $T_4$ through $T_6$, the voltage waveform $V_{P11}'$ is freed from distortion since the signal electrode $Y_1$ is applied with the selection signal $Y_S$ whereas the signal electrode $Y_2$ is applied with the non-selection signal $Y_{NS}$ with the result that the rising of the voltage waveform $V_{P12}'$ is degraded. In consequence, the effective value of voltage applied to the picture cell $P_{12}$ becomes smaller than that of voltage applied to the picture cell $P_{12}$ by an amount equivalent to the degraded rising, resulting in increased darkness.

(2)     Influence of $R_{Y2}$

The influence of the on-resistance $Y_{Y2}$ will now be described on the assumption that in Fig. 4, only the on-resistance $R_{Y2}$ is finite and the other resistances are zero.

In this case, the selection signal $Y_S$ and the non-selection signal $Y_{NS}$ stand for signals fed from constant voltage sources and they will not be distorted. Similarly, the scanning electrodes $X_i$ are brought into connection with constant voltage sources and their voltage waveforms $V_{Xi}$ are free from distortion. The voltage waveforms $V_{Yj}$ for the signal electrodes $Y_j$ are distorted under the influence of the resistance $R_{Y2}$, and individual signal electrodes $Y_j$, which are independent and do not interfere with each other, undergo the degradation of rising to the same extent. Thus, all the picture cells are darkened uniformly under the influence of the on-resistance $R_{Y2}$ and no uneven brightness will occur.

(3)        Influence of $R_{X1}$

The influence of the on-resistance $R_{X1}$ will now be described on the assumption that in Fig. 4, only the on-resistance $R_{X1}$ is finite and the other resistances are zero.

Fig. 6 shows voltage waveforms $V_{P11}"$ and $V_{P12}"$ applied to the picture cells $P_{11}$ and $P_{12}$ when the waveform distortion under the influence of the on-resistance $R_{X1}$ is taken into consideration.

Any of the scanning electrodes $X_i$ is applied with the selection signal $X_S$ once per one frame scanning. The scanning electrode $X_1$, for example, is applied with the selection signal $X_S$ during only the period $T_1$ but it is applied with the non-selection signal $X_{NS}$ during the periods $T_2$ through $T_6$ as shown in Fig. 2. Current flowing through the on-resistance $R_{X1}$ of the electronic switch $S_{X12}$ included in the multiplexer 5 is always five times as large as current flowing through the on-resistance $R_{X1}$ of the electronic switch $S_{X11}$ and as described previously, the waveform distortion of the non-selection signal $X_{NS}$ becomes larger than that of the selection signal $X_S$ and it may be considered that the generation of waveform distortion prevails substantially in the non-selection signal $X_{NS}$ alone. This is more eminent in actual devices in which the number of the scanning electrodes is often larger.

Thus, with reference to Fig. 6, the scanning electrode $X_1$ is applied with the selection signal $X_S$ during the period $T_1$ and the waveform distortion will not occur. The voltage waveforms $V_{P11}"$ and $V_{P12}"$ applied to the picture cells $P_{11}$ and $P_{12}$ are free from the waveform distortion during the period $T_1$ but subjected to the waveform distortion during the periods $T_2$ through $T_6$.

During the periods $T_2$ and $T_3$, the picture cells $P_{11}$ and $P_{12}$ are applied with the same waveform.

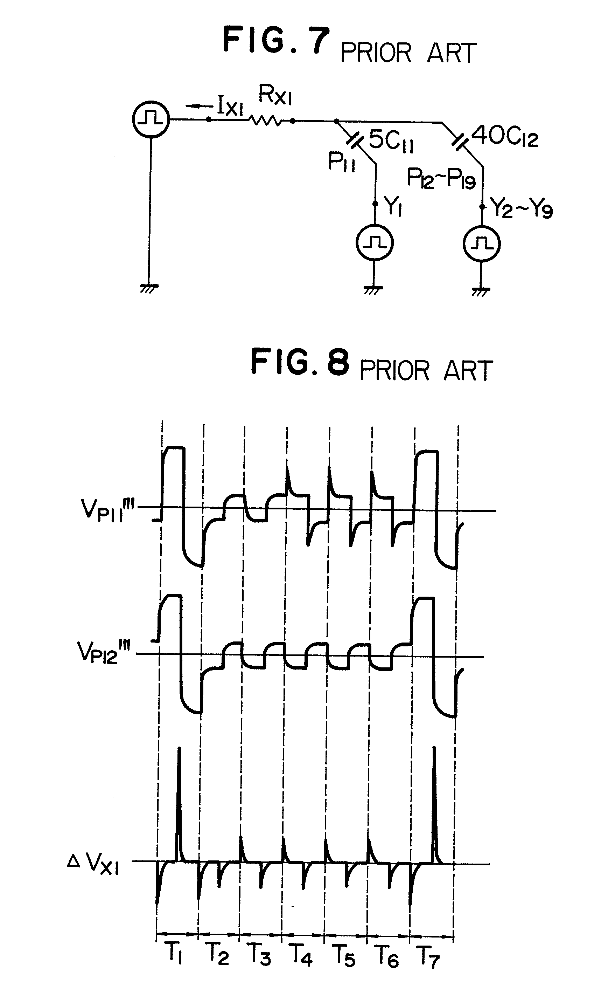

During the periods $T_4$ through $T_6$, the signal electrode $Y_1$ is applied with the selection signal $Y_S$ and the signal electrode $Y_2$ with the non-selection signal $Y_{NS}$. At this time, since the voltages $V_{Y2}$ to $V_{Y9}$ applied to the signal electrodes $Y_2$ to $Y_9$ have the same waveform and the non-selection signal $X_{NS}$ is always applied to five of the six scanning electrodes, an equivalent circuit as shown in Fig. 7 is obtained in respect of the non-selection signal $X_{NS}$.

0071911

Currents flowing to the five scanning electrodes are totalized into a current $I_{X1}$ and a voltage drop $\Delta V_{X1}$ $(=I_{X1} \cdot R_{X1})$ across the on-resistance $R_{X1}$ due to the current $I_{X1}$ causes waveform distortion. But capacitances associated with the picture cells $P_{12}$ to $P_{19}$ are totalized and eight times as large as the capacitance associated with the picture cell $P_{11}$ and hence the majority of current $I_{X1}$ flows to the picture cells $P_{12}$ to $P_{19}$ so that the picture cell $P_{11}$ is not affected by the current $I_{X1}$. As a result, the picture cell $P_{12}$ is applied with the voltage $V_{P11}''$ which is distorted by the voltage drop $\Delta V_{X1}$ not only during the periods $T_2$ and $T_3$ but also during the periods $T_4$ through $T_6$ whereas the picture cell $P_{11}$ is applied with the voltage $V_{P12}''$ added with the voltage drop $\Delta V_{X1}$ during the periods $T_4$ through $T_6$. Thus, the effective values of the voltages $V_{P11}''$ and $V_{P12}''$ become different from each other and the brightness of the picture cell $P_{11}$ becomes different from that of the picture cell $P_{12}$.

(4) Influence of $R_{X2}$

Lastly, the influence of the on-resistance $R_{X2}$ will be described on the assumption that in Fig. 4, only the on-resistance $R_{X2}$ is finite and the other resistances are zero. In this case, the voltage waveforms $V_{Xi}$ applied to the scanning electrodes are subjected to waveform distortion.

Fig. 8 shows voltage waveform $V_{P11}$ and

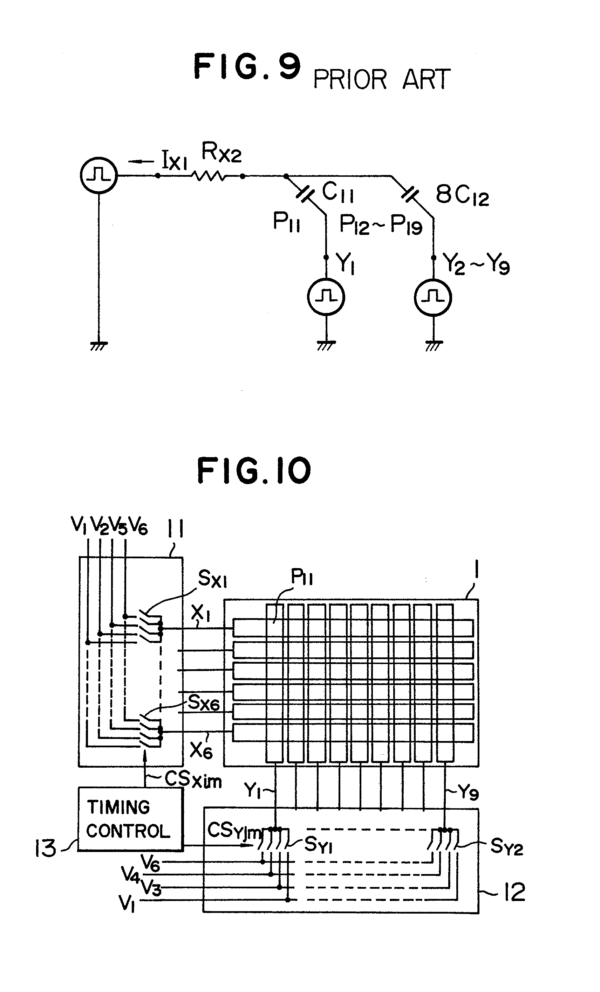

$V_{P12}$ applied to the picture cells $P_{11}$ and $P_{12}$ when the waveform distortion under the influence of the on-resistance $R_{X2}$ is taken into consideration, and Fig. 9 shows an equivalent circuit in respect of the scanning electrode $X_1$. Voltage waveforms $V_{Y1}$ to $V_{Y9}$ applied to the signal electrodes $Y_1$ to $Y_9$ and the selection signal $X_S$ and non-selection signal $X_{NS}$ are considered to be outputs from a constant voltage source.

Since the on-resistance $R_{X2}$ in Fig. 9 substitutes for the on-resistance $R_{X1}$ in Fig. 7, the voltage waveforms applied to the picture cells $P_{11}$ and $P_{12}$ as shown in Fig. 8 are the same as those shown in Fig. 6, excepting that the voltage waveforms $V_{P11}"$ and $V_{P12}"$ applied to the picture cells $P_{11}$ and $P_{12}$ are distorted under the influence of the on-resistance $R_{X2}$ during the period $T_1$.

As will be seen from Fig. 8, the on-resistance $R_{X2}$ makes the effective values of the voltages $V_{P11}$ AND $V_{P12}$ different and the picture cell $P_{11}$ becomes more bright.

The influences of the on-resistances $R_{X1}$, $R_{X2}$, $R_{Y1}$ and $R_{Y2}$ upon the generation of uneven brightness in the pattern display of Fig. 1 as described above will be summarized in the following Table.

| on-resistances responsible for distortion | $R_{Y1}$ | $R_{Y2}$ | $R_{X1}$ | $R_{X2}$ |
|---|---|---|---|---|
| signals undergoing waveform distortion | $Y_{NS}$ | $V_{Yj}$ | $X_{NS}$ | $V_{Xi}$ |
| presence or absence of uneven brightness | present | absent | present | present |

As will be seen from the foregoing description, in the conventional drive circuit, the rising of the drive waveform is degraded by the on-resistance of the electronic switch and uneven brightness is liable to occur in the displayed image.

In order to prevent the uneven brightness, it is necessary that the on-resistances $R_{Y1}$, $R_{Y2}$, $R_{X1}$ and $R_{X2}$ be sufficiently small. Taking a display panel having picture cells arranged in 32 rows X 640 columns, for instance, the present inventors studies conditions for preventing the generation of uneven brightness to reach the results as below.

$$R_{X1} \leqq 4.7\ \Omega$$
$$R_{X2} \leqq 150\ \Omega$$
$$R_{Y1} \leqq 1K\ \Omega \quad ---(1)$$
$$R_{Y2} \leqq 22\ \Omega$$

It has hitherto been strongly desired to integrate the drive circuit and reduce power consumption therein. The conventional device has, however, difficulties in satisfying the above desirability and reducing the on-resistance $R_{X1}$ through which a large current flows so that voltage drop across this on-resistance can be negligible.

The present invention contemplates elimination of the disadvantages set forth above and has for its object to provide a drive circuit for a display device which is easy to integrate and which can reduce power consumption and prevent uneven brightness of display.

According to the invention, the above object can be accomplished by a display device comprising a scanning electrode drive circuit and a signal electrode parallel to independently receive each of the DC voltage signals and transmit it to the one electrode.

In a preferred embodiment of the invention, the display panel has a plurality of picture cells arranged in a matrix form as a whole, the one-input/one-output switch is constituted by a complementary MOS transistor, the three or more kinds of DC voltage signals establish four voltage levels, and the display medium is liquid crystal. However, the present invention is by no means limited to such an embodiment.

Other objects and features of the invention will be apparent from the following detailed description taken in conjunction with the accompanying drawings, in which:

Fig. 1 is a schematic diagram showing a prior art display device;

Figs. 2a and 2b show waveforms of voltages $V_{Xi}$ and $V_{Yj}$ applied to the scanning electrode $X_i$ and signal electrode $Y_j$ shown in Fig. 1;

Fig. 3 shows voltage waveforms applied to the picture cells $P_{11}$ and $P_{12}$ shown in Fig. 1;

Fig. 4 is an electrical equivalent circuit of the display device of Fig. 1;

- 18 - 0071911

Fig. 5 shows waveforms subjected to distortion under the influence of the on-resistance $R_{Y1}$ shown in Fig. 4;

Fig. 6 shows waveforms subjected to distortion under the influence of the on-resistance $R_{X1}$;

Fig. 7 is an electrical equivalent circuit of the Fig. 1 display device in respect of non-selection signal $X_{NS}$ on the assumption that only the on-resistance $R_{X1}$ is finite;

Fig. 8 shows waveforms subjected to distortion under the influence of the on-resistance $R_{X2}$;

Fig. 9 is an electrical equivalent circuit of the Fig. 1 display device in respect of the scanning electrode $X_1$ on the assumption that only the on-resistance $R_{X2}$ is finite;

Fig. 10 is a schematic diagram showing a display device embodying the invention;

Fig. 11 is a circuit diagram useful in explaining the fundamental operation of the Fig. 10 display device;

Fig. 12 shows drive waveforms in Fig. 11;

Fig. 13 is a circuit diagram showing an example of implementation of the Fig. 11 circuit;

Fig. 14 is a schematic diagram showing a second embodiment of the invention;

Fig. 15 is a schematic diagram showing a third embodiment of the invention; and

Fig. 16 shows drive waveforms in the Fig. 15 embodiment.

The invention will now be described by way of example.

Embodiment 1

A first embodiment of the invention is shown in Fig. 10 in which like elements and the same elements as those in Fig. 1 are designated by the same reference characters.

In Fig. 10, there are seem a scanning electrode drive circuit 11, a signal electrode drive circuit 12, a timing control circuit 13, and a multiplex matrix display panel 1 similar to that of Fig. 1.

The scanning electrode drive circuit 11 and the signal electrode drive circuit 12 have each one stage of a plurality of four-input/one-output electronic switches $S_{Xi}$ (i=1, 2, ---, 6) and $S_{Yj}$ (j=1, 2, ---, 9) which are the same in number as the electrodes, and DC voltage signals $V_1$, $V_2$, $V_5$ and $V_6$ and $V_1$, $V_3$, $V_4$ and $V_6$ are directly coupled to the inputs of each of the electronic switches. Individual switches constituting the electronic switches $S_{X1}$ and $S_{Yj}$ are on-off controlled by control signals fed from the timing control circuit 13. Actually, the control signals $CS_{Xim}$ and $CS_{Yjm}$ (m=1, 2, 3, 4) are assigned to the individual switches but in Fig. 10, each of the control signals are represented by a signal on a single line for simplicity of illustration.

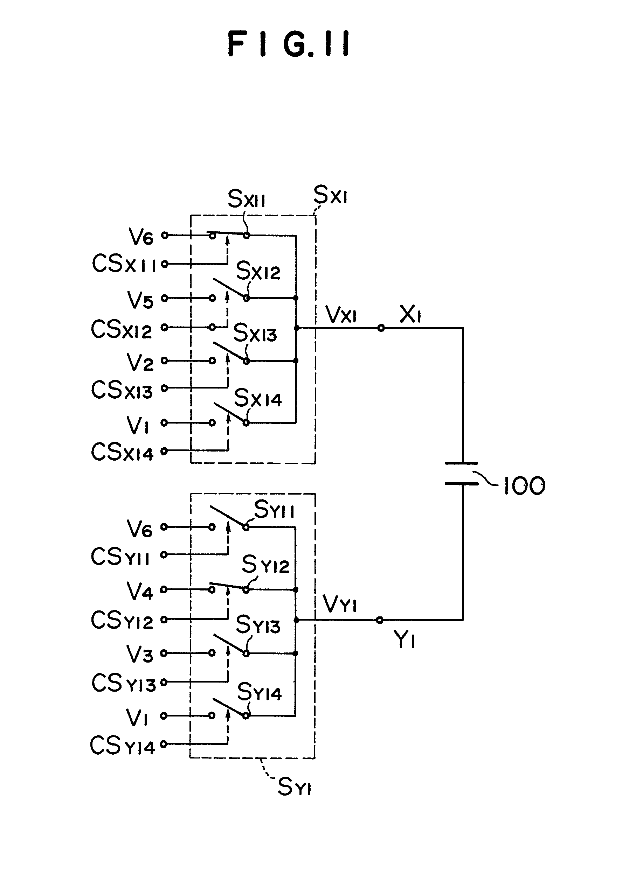

Fig. 11 is a fundamental diagram for explaining the invention and it shows a drive circuit adapted for driving one picture cell, for example, $P_{11}$.

The electronic switch $S_{X1}$ includes a plurality of one-input/one-output switches $S_{X1m}$ (m=1, 2, 3, 4) connected in parallel to independently receive, as input signals, the DC voltage signals $V_6$, $V_5$, $V_2$ and $V_1$. Similarly, the electronic switch $S_{Y1}$ includes a plurality of one-input/one-output switches $S_{Y1m}$ (m=1, 2, 3, 4) connected in parallel to independently receive the DC voltage signals $V_6$, $V_4$, $V_3$ and $V_1$.

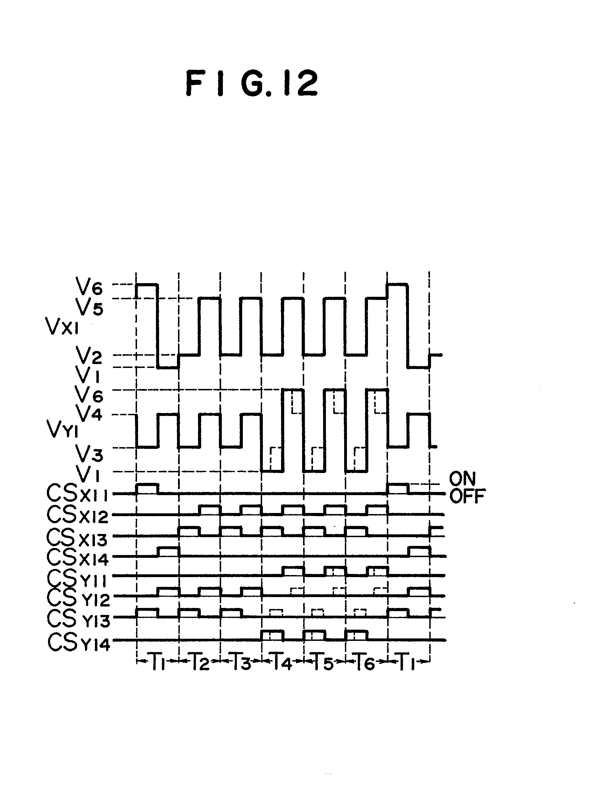

Individual switches $S_{X1m}$ and $S_{Y1m}$ are on-off controlled by control signals $CS_{X1m}$ and $CS_{Y1m}$ from the timing control circuit 13 as shown in Fig. 12. For example, considering the control signal $CS_{X1m}$ for controlling an electronic switch $S_{X1}$ as shown in Fig. 12, only the switch $S_{X11}$ is turned on by a control signal $CS_{X11}$ during preceding half of the period $T_1$ and the DC voltage signal $V_6$ is transmitted through the electronic switch $S_{X1}$ and applied, as an output signal $V_{X1}$, to the scanning electrode $X_1$. During succeeding half of the period $T_1$, only the switch $S_{X14}$ is turned on by a control signal $CS_{X14}$ and the DC voltage $V_1$ is applied to the scanning electrode $X_1$. A similar operation follows. Also, an electronic switch $S_{Y1}$ is operated in a similar manner. A display medium or liquid crystal 100 is driven by the difference between voltages applied to the scanning electrode $X_1$ and the signal electrode $Y_1$.

If it is desired to display at brightness of halftone as in television display, the control signal $CS_{Yjm}$ for the electronic switch $S_{Yj}$ associated with the signal electrode $Y_j$ may be modulated in pulse width. For example, as shown at dotted lines in Fig. 12, the pulse widths of the control signals $CS_{Y11}$ and $CS_{Y14}$ are narrowed during the periods $T_4$ through $T_6$ and the control signals $CS_{Y12}$ and $CS_{Y13}$ are generated during intervals corresponding to the narrowed pulse widths.

The switches $S_{Xim}$ and $S_{Yjm}$ constituting the electronic switches $S_{Xi}$ and $S_{Yj}$ may comprise known bipolar transistors (PNP transistors, NPN transistors) or field effect transistors (junction type transistors, P-channel MOS transistors, N-channel MOS transistors, complementary MOS transistors).

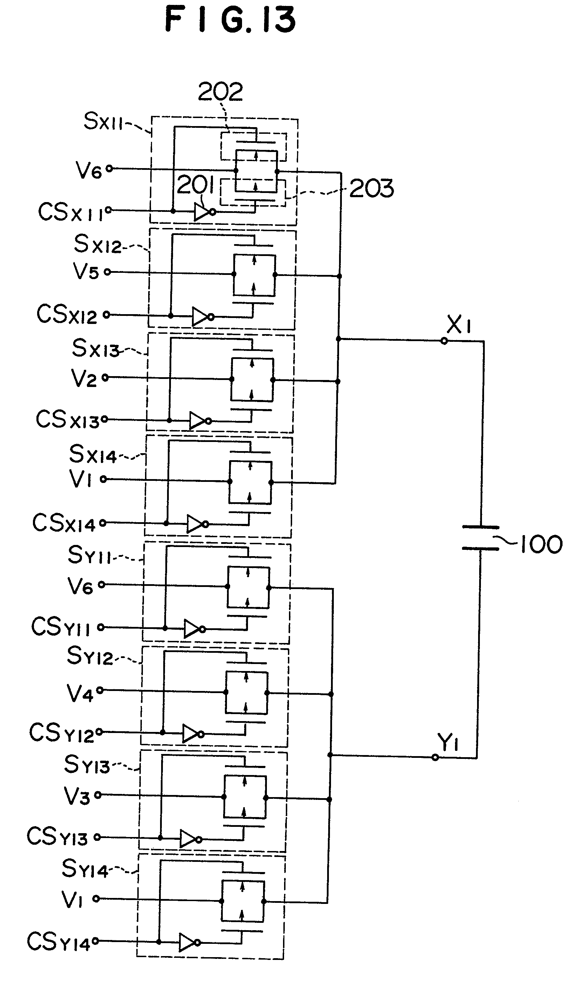

Exemplarily, the switches $S_{Xim}$ and $S_{Yjm}$ shown in Fig. 11 are constituted with complementary MOS transistors as shown in Fig. 13, in which the same elements as those in Fig. 11 are designated by the same reference characters.

An N-channel MOS transistor 202 and a P-channel MOS transistor 203 are connected in parallel to form a current path of the switch $S_{X1m}$ or $S_{Y1m}$. Since voltage level of the control signal $CS_{X1m}$ or

$CS_{Y1m}$ applied to one of the transistors is invented by an inverter 201, both the transistors 202 and 203 are turned on when the control signal $CS_{X1m}$ or $CS_{Y1m}$ is at a high potential (for example, +5 V) and turned off when the control signal $Cs_{X1m}$ or $CS_{Y1m}$ is at a low potential (for example, 0(zero) V).

As described above, in the present embodiment, the number of stages of the electronic switch can be reduced to one by using a plurality of four-input/one-output electronic switches each having four one-input/one-output switches connected in parallel for the scanning electrode drive circuit 11 and signal electrode drive circuit 12, thereby making zero the on-resistances $R_{X1}$ and $R_{Y1}$ in Fig. 4 and preventing the generation of uneven brightness under the influence of the on-resistances $R_{X1}$ and $R_{Y1}$.

In other words, extensive reduction in the on-resistances $R_X$ and $R_Y$ of the electronic switches $S_{Xi}$ and $S_{Yj}$ is not required. For example, the conditions for preventing the generation of uneven brightness in a display panel of the same number of picture cells as used for calculation of equation (1), that is, arranged in a matrix of 32 rows X 640 columns are given as follows:

$$R_X \leq 300 \ \Omega$$
$$R_Y \leq 15 \ K\Omega \qquad \text{---(2)}$$

Accordingly, the prsent embodiment can readily materialize resistance values which substantially prevent the generation of uneven brightness, and disperse with the conventional switches of low resistances of several ohms, thus making it easy to realize circuit integration.

Embodiment 2

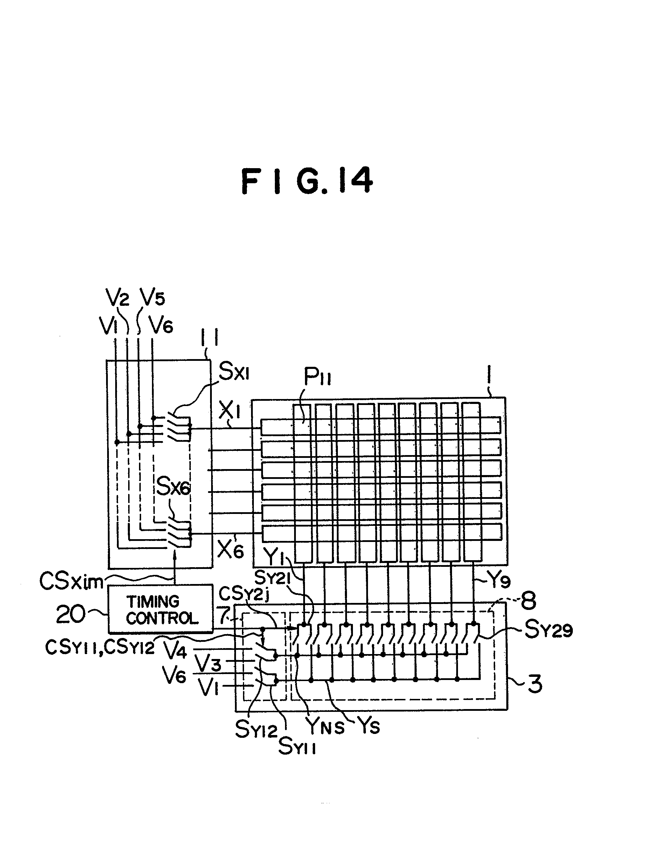

Fig. 14 shows a second embodiment of the invention. In the figure, like elements and the same elements as those in Fig. 1 are designated by the same reference characters.

In this embodiment, a scanning electrode drive circuit 11 has one stage of a plurality of four-input/one-output electronic switches $S_{Xi}$ (i=1, 2, ---, 6) each associated with one scanning electrode and including four one-input/one-output switches connected in parallel, and a signal electrode drive circuit 3 has, as in the prior art device shown in Fig. 1, two-stage connection of two-input/one-output electronic switches $S_{Y11}$ and $S_{Y2j}$ (j=1, 2, ---, 9) and of two-input/one-output electronic switches $S_{Y12}$ and $S_{Y2j}$. Control signals $CS_{Xim}$ (m=1, 2, 3, 4), $CS_{Y11}$, $CS_{Y12}$ and $CS_{Y2j}$ are fed from a timing control circuit 20.

As described previously, the maximum current flows through the on-resistance $R_{X1}$ shown in Fig. 1 and the uneven brightness is most liable to be caused by the on-resistance $R_{X1}$. Therefore, the provision of the four-input/one-output electronic switches in the scanning electrode drive circuit 11 alone can attain effects comparable to those of the first embodiment.

Embodiment 3

A third embodiment of the invention is shown as those of Fig. 10 are disignated by the same reference characters.

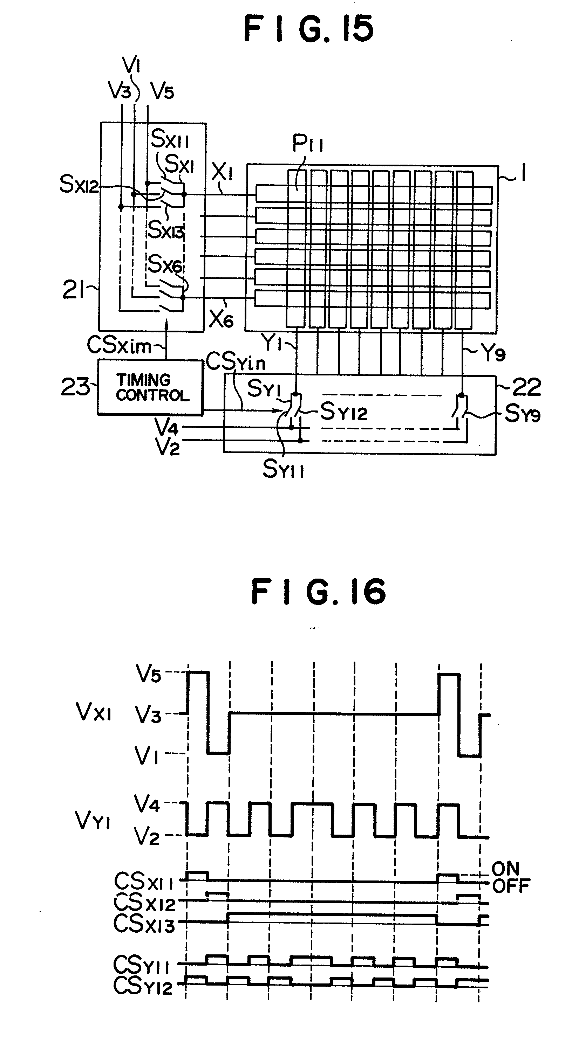

Fig. 16 shows voltage waveforms $V_{X1}$ and $V_{Y1}$ and control signals $CS_{X1m}$ and $CS_{Y1m}$ applied to the scanning electrode $X_1$ and signal electrode $Y_1$ constituting the picture cell $P_{11}$. In Fig. 16, $V_1=-(1-\frac{1}{a})V_o+V_c$, $V_2=-\frac{1}{a}V_o+V_c$, $V_3=V_c$, $V_4=\frac{1}{a}V_o+V_c$ and $V_5=(1-\frac{1}{a})V_o$ are held. The display device of this invention is also operable with the drive waveforms as shown in Fig. 16.

In this embodiment, a scanning electrode drive circuit 21 has one stage of a plurality of three-input/one-output electronic switches $S_{Xi}$ each including three one-input/one-output switches $S_{Xim}$ ($i=1$, 2, ---, 6; $m=1$, 2, 3), and a signal electrode drive circuit 22 has one stage of a plurality of two-input/one-output electronic switches $S_{Yj}$ each including two one-input/one-output switches $S_{Yjn}$ ($j=1$, 2, ---, 9; $n=1$, 2). Control signals $CS_{Xim}$ and $CS_{Yjn}$ for on-off controlling the switches $S_{Xim}$ and $S_{Yjn}$ are fed from a timing control circuit 23.

In this embodiment, the number of stages of the three-input/one-output electronic switches included in the scanning electrode drive circuit 21 is also reduced to one for delivery of voltages $V_{Xi}$ applied to the scanning electrodes Xi, thereby attaining effects

Although in the first to third embodiments the input signal to the drive circuit is of three levels or four levels, an input signal of five or more levels may be applied to the present invention.

The display medium may comprise other materials than liquid crystal, and the invention may also be applicable to such devices as for plasma display, electrochromic, electroluminescence and PLZT which undergo uneven brightness when operated with a drive circuit which is constituted with two stages of switch as in the conventional drive circuit.

Further, the invention is in no way limited by configuration and arrangement of the picture cell and electrode included in the display panel. Namely, it is not always necessary that the picture cells be regularly arranged in matrix, and the picture cells may be arranged in any segmental forms so long as the scanning and signal electrodes are arranged in matrix. The configuration of the electrode is not limited to the rod shape but the electrode may be narrowed at portions at which the picture cells are not formed. Further, the scanning electrodes and the signal electrodes may be provided on one substrate, with signal electrodes opposing the scanning electrodes on the one substrate and scanning electrodes opposing the signal electrodes on the one substrate formed on the other substrate. Moreover, the invention is also applicable to a multiplex matrix system as disclosed in US patent No. 4,233,602 wherein a plurality of scanning lines are scanned simultaneously so that the number of scanning lines or scanning electrodes can apparently be reduced.

It will also be apprecited that the voltage signals applied to the scanning electrodes and signal electrodes may take other known waveforms than those used in the foregoing embodiments.

As has been described, since according to the invention, one of at least three-level DC voltage input signals is simultaneously selected and delivered out, the generation of uneven brightness of display can be prevented and accordingly, a high quality drive circuit for display devices can be obtained which is easy to integrate and is reduced in power consumption.

WHAT IS CLAIMED IS:

1.      In a display device comprising:  a display panel (1) having a pair of substrates with a plurality of scanning electrodes $(X_1, X_2 ---, X_6)$ and a plurality of signal electrodes $(Y_1, Y_2, ---, Y_9)$ formed on opposing surfaces of the substrates, and a display medium confined between the substrates, whereby a great nuber of picture cells $(P_{ij})$ are formed by opposing portions of the scanning and signal electrodes and display medium confined therebetween; a scanning electrode drive circuit (11, 21) for selectively applyig one of a plurality of kinds of DC voltage signals $(V_1, V_2, V_5, V_6; V_3, V_1, V_5)$ to each of the scanning electrodes; and a signal electrode drive circuit (12, 3, 22) for selectively applying one of a plurality of kinds of DC voltage signals $(V_1, V_3, V_4, V_6; V_2, V_4)$ to each of the signal electrodes, the inprovement wherein at least one of the scanning electrode and signal electrode drive circuits comprises a plurality of plural-input/one-output electronic switches $(S_{X1}, ---, S_{X6}; S_{Y1}, ---, S_{Y9})$ each including a plurality of one-input/one-output switches $(S_{X11}, S_{X12}, ---; S_{Y11}, S_{Y12}, ---)$ associated with one electrode which are the same in number as three or more kinds of DC voltage signals and which are connected in parallel to independently receive each of the DC voltage signals and transmit it to the one electrode.

0071911

2.    A display device according to claim 1, wherein said one-input/one-output switch comprises a complementary MOS transistor (202, 203).

3.    A display device according to claim 1 or 2, wherein said display medium comprises a liquid crystal.

4.    A display device according to claim 3, wherein each of the scanning electrodes is selectively applied with one of voltages $V_c$, $\frac{1}{a}V_o+V_c$, $(1-\frac{1}{a})V_o+V_c$ and $V_o+V_c$, and each of the signal electrodes is selectively applied with one of voltages $V_c$, $\frac{2}{a}V_o+V_c$, $(1-\frac{2}{a})V_o+V_c$ and $V_o+V_c$, where $V_o$ is a maximum amplitude of voltage applied to the picture cell, and $\underline{a}$ and $V_c$ are arbitrary constants.

5.    A display device according to claim 3, wherein each of the scanning electrodes is selectively applied with one of voltages $-(1-\frac{1}{a})V_o+V_c$, $V_c$ and $(1-\frac{1}{a})V_o+V_c$, and each of the signal electrodes is selectively applied with one of voltages $-\frac{1}{a}V_o+V_c$ and $\frac{1}{a}V_o+V_c$, where $V_o$ is a maximum amplitude of voltage applied to the picture cell, and $\underline{a}$ and $V_c$ are arbitrary constants.

6.    A display device according to claim 1, wherein a halftone display is effected by changing the period during which one switch is selected.

7.    A display device according to claim 1, wherein the display panel comprises the picture cells arranged in matrix as a whole.

# FIG. I PRIOR ART

# FIG. 5 PRIOR ART

**FIG. 2a** PRIOR ART

## FIG. 2b PRIOR ART

4/12                           0071911

# FIG. 3  PRIOR ART

# FIG. 4
## PRIOR ART

# FIG.6 PRIOR ART

| | $T_1$ | $T_2$ | $T_3$ | $T_4$ | $T_5$ | $T_6$ | $T_1$ |
|---|---|---|---|---|---|---|---|
| $V_{X1}$ | $X_S$ | $X_{NS}$ | $X_{NS}$ | $X_{NS}$ | $X_{NS}$ | $X_{NS}$ | $X_S$ |
| $V_{Y1}$ | $Y_{NS}$ | $Y_{NS}$ | $Y_{NS}$ | $Y_S$ | $Y_S$ | $Y_S$ | $Y_{NS}$ |
| $V_{Y2}$ | $Y_{NS}$ | $Y_{NS}$ | $Y_{NS}$ | $Y_{NS}$ | $Y_{NS}$ | $Y_{NS}$ | $Y_{NS}$ |

$$V_{P11}'' = V_{X1} - V_{Y1}$$

$$V_{P12}'' = V_{X1} - V_{Y2}$$

$$\triangle V_{X1}$$

$T_1$  $T_2$  $T_3$  $T_4$  $T_5$  $T_6$  $T_1$

# FIG. 7 PRIOR ART

# FIG. 8 PRIOR ART

## FIG. 9 PRIOR ART

## FIG. 10

# F I G.11

F I G. 12

# F I G. 13

# F I G. 14

# F I G. 15

# F I G. 16